# EUROPÄISCHE PATENTSCHRIFT

(11) **EP 0 591 760 B1**
(45) Veröffentlichungstag und Bekanntmachung des Hinweises auf die Patenterteilung: **29.05.1996**
(21) Anmeldenummer: 93115239.1
(22) Anmeldetag: 22.09.1993
(51) Int. Cl.: A47J 39/00, H05B 6/06

(54) **Mittel zum Transportieren und Warmhalten von Speisen**
Transport and warming device for food on trays
Appareil de transport et de réchauffement de denrées

(30) Priorität: 07.10.1992 CH 3129/92
(43) Veröffentlichungstag der Anmeldung: 13.04.1994
(73) Patentinhaber: Berndorf Luzern AG, CH-6014 Littau (CH)
(72) Erfinder: Meier, Hermann, CH-6014 Littau (CH); Witzig, Martin, CH-8812 Horgen (CH)
(74) Vertreter: Ritscher, Thomas, Dr.

(56) Entgegenhaltungen:
- EP-A- 0 203 883
- EP-A- 0 285 552
- EP-A- 0 506 583
- DE-A- 2 711 088
- DE-U- 9 213 948
- FR-A- 2 345 123
- PATENT ABSTRACTS OF JAPAN vol. 014, no. 234 (E-0929)17. Mai 1990 & JP-A-02 061 981 (TOSHIBA CORP.) 1. März 1990

## Beschreibung

Die vorliegende Erfindung betrifft Mittel zum Transportieren und Warmhalten von Speisen gemäss den Oberbegriffen der Ansprüche 1, 3, und 4.

Derartige Mittel finden ihre Verwendung vorzugsweise in Grossküchen von Spitälern und Betriebskantinen, bei welchen die fertiggestellten Mahlzeiten von der Küche zu den jeweiligen Patientenabteilungen oder Ausgabestellen transportiert werden müssen. Dabei kommt dem Warmhalten der auf unterschiedlichen Temperaturen zubereiteten und angerichteten Speisen eine besondere Bedeutung zu. Üblicherweise werden die heiss angerichteten Mahlzeiten mit einer metallischen oder Kunststoffglocke, im folgenden auch Cloche genannt, in geeigneten Transportwagen zu den jeweiligen Ausgabestellen geführt. Solche Transportwagen sind dem Fachmann hinlänglich bekannt und bestehen in der Regel aus einem metallischen Schrankteil, in welches mehrere Tabletts übereinander eingeschoben werden können. Es hat sich jedoch gezeigt, dass die erwärmten Speisen trotz der dieser Cloche beim Transport in unerwünschter Weise abkühlen.

Es ist deshalb auch schon vorgeschlagen worden, die einmal transportierten Speisen in einem geeigneten Schrank wieder aufzuwärmen. Dies erweist sich jedoch aus verschiedenen Gründen als äussert problematisch und unpraktisch. Insbesondere lassen sich die mit verschiedenen Temperaturen angerichteten Speisen nicht in einfacher Weise wieder individuell aufwärmen und bringt das Umladen der einzelnen Tabletts unerwünschte Mehrarbeit mit sich. Aus physiologischen Gründen ist aber das Aufwärmen von einmal fertig zubereiteten Speisen inakzeptabel, da das Wiedererwärmen der Speisen zu Oxydationen bzw. zur Bildung von toxisch Stoffen führen kann.

Es bestehen deshalb bereits in verschiedenen Ländern gesetzliche Vorschriften über das Aufbewahren von fertig zubereiteten Speisen. Insbesondere verbieten diese Verordnungen das Abkühlen der Speisen auf eine Temperatur unterhalb von 65°C.

Es ist somit Aufgabe der vorliegenden Erfindung Mittel zu schaffen mit welchen die einzelnen Speisen auf ihrer individuellen Temperatur gehalten werden können, d.h. mit welchen der in Fachkreisen auch als "Temperaturdurchhänger" bezeichnete Temperatureinbruch vermieden werden kann.

Erfindungsgemäss werden dazu mehrere speziell aufeinander abgestimmte und in geeigneter Weise zusammenwirkende Erzeugnisse verwendet.

Die Aufgabe wird erfindungsgemäss durch einen Tablett-Transportwagen mit den Merkmalen des vorliegenden Anspruchs 1 sowie in den Ansprüchen, 3, und 4 gekennzeichnenden Mitteln gelöst.

Einerseits wird dazu ein Tablett-Transportwagen verwendet, in welchem die eingeschobenen Speisen in geeigneter Weise positioniert werden können und mittels speziell angepasster Induktionsheizungen individuell warmgehalten werden können; und andererseits ist dafür auch speziell geeignetes Geschirr vorgesehen. Insbesondere sind der Transportwagen, dessen Tabletts und das Geschirr derart ausgebildet, dass die Speisen an vorbestimmten Plätzen positioniert werden und das Geschirr an diesen Stellen einem elektromagnetischen Wechselfeld ausgesetzt wird, wobei das Wechselfeld durch in einem geeigneten spulenträger angeordnete Spulen erzeugt wird, die von einem Wechselstrom durchflossen werden, der durch einen in diesen Wagen eingebauten erfindungsgemässen HF-Generator erzeugt wird, welcher Generator wahlweise von Stromnetz oder von einem Stromspeicher gespiesen wird und welcher Stromspeicher im Tablett-Transportwagen eingebaut sein kann. Dieses elektromagnetische Wechselfeld induziert in dem mit mindestens einem elektrisch leitenden Belag versehenen erfindungsgemässen Geschirr einen Induktionsstrom, der zur Erwärmung des Geschirrs und damit auch der Speisen führt.

In einer bevorzugten Ausführungsform kann der erfindungsgemässe Tablett-Transportwagen mit zwölf übereinander liegenden Tabletts bestückt werden.

Damit haben die Wagen eine Bauhöhe, bei der die einzelnen Tabletts für das Personal in einfacher Weise erreichbar sind. Es versteht sich, dass der für das Warmhalten der Speisen eingebaute Generator der Anzahl der angebrachten Tablettablageplätze, d.h. der Gesamtinduktivität der verwendeten Spulen angepasst sein muss. Andernfalls besteht die Gefahr, dass der Generator an seiner Leistungsgrenze arbeitet und Überlastungsschäden auftreten. Der erfindungsgemässe HF-Generator ist deshalb derart konzipiert, dass dieser auch bei einer unterschiedlich starken Belegung der Tablettplätze mit warmzuhaltenden Speisen, d.h. mit einer in vorgegebenen Grenzen variablen Belastung der Induktionsspulen, einwandfrei arbeitet.

Bei bekannten Wärmeschränken wird der für die Erzeugung des elektromagnetischen Wechselfeldes notwendige Wechselstrom mit Hilfe eines Thyristors erzeugt, welcher über eine entsprechende Elektronik gesteuert wird. Bei den für die Induktionsheizung von Wärmeschränken verwendeten HF-Generatoren treten im Betrieb Stromspitzen von bis zu 180 Ampère auf. Die von der Steuerelektronik erzeugte Pulsrepetitionsfrequenz beträgt ca. 22 kHz und sinkt je nach Belastung des Generators bis fast auf die Hälfte ab. Ausserdem lässt sich mit dieser Art der Stromsteuerung die Leistung nur schlecht regulieren.

Eine derartige Vorrichtung gemäß dem Oberbegriff des Anspruchs 1, ist bspw. aus der DE-A-2711088 bekannt, mit welcher portionierte Nahrungsmittel in einem mit Induktionsheizspulen versehenen Wagen transportiert werden können. Zur Erzeugung des zum Aufwärmen der Speisen erforderlichen Stromes umfasst die verwendete Elektronik einen Wechselstromgenerator mit einer lastabhängigen Oszillatorfrequenz von 10 kHz bis 80 Hz.

Demgegenüber ist der erfindungsgemässs HF-Generator so ausgelegt, dass die Gesamtinduktivität der angeschlossenen Spulen im Bereich von 32µH bis 76µH variieren kann, dass aber ein parallel geschalteter Kondensator so dimensioniert wird, dass für alle oben genannten Induktionswerte eine Resonanzfrequenz von ca. 37kHz resultiert und als Schaltelement ein IGBT verwendet wird, wodurch die geschalteten Stromspitzen von üblicherweise 150A auf maximal 80A reduziert werden. Wesentlich für die Auslegung des erfindungsgemässen Warmhalte-Systems ist auch die besondere Beschichtung des Geschirrs. So erweist es sich als wesentlich, dass die auf unterschiedliche Temperaturen zu haltenden Geschirrteile eine individuell abgestimmte Beschichtung aufweisen. So sollen die Suppenschalen auf einer anderen Temperatur gehalten werden können als z.B. Eintopfschalen oder Menueteller. Erfindungsgemäss werden deshalb die einzelnen Geschirrteile mit unterschiedlichen metallischen Beschichtungen versehen. Insbesondere ist diese metallische Beschichtung derart ausgebildet, dass darin durch die Induktion unterschiedliche Stromdichten erzeugt werden. Einfacherweise wird dies durch eine in gewünschter Weise lokal unterschiedlich angeordnete Teilbeschichtung erreicht. In einer Weiterbildung ist die Beschichtung derart, dass einzelne Kompartimente des Menuetellers unterschiedlich beschichtet sind und diese Teller auf dem Tablett in einer vorgegebenen Stellung positioniert werden. Damit können in einfacher Weise verschiedene Speisen sogar auf demselben Teller auf unterschiedlicher Temperatur gehalten werden.

Erfindungsgemäss wird zum Warmhalten der Speisen eine doppelwandige isolierende Cloche verwendet, welche ebenfalls mit einer metallischen Schicht versehen ist. Diese Cloche wird im wesentlichen dem elektromagnetischen Wechselfeld der über ihr liegenden Spule ausgesetzt und damit erwärmt. Es ist deutlich, dass damit die Heizleistung des gesamten Systems geglättet und damit weiter verbessert wird.

Wesentlich für die Wirksamkeit dieser Cloche ist es die metallische Schicht an der Innenseite der isolierenden Schicht anzubringen. Damit wird mit dem Aufheizen der Cloche ein wärmehaltender Speicher erzeugt, der einerseits seine Wärme nur in den von ihm umschlossenen Raum abgeben kann und andererseits keine Wärme in das mit u.U. kühlen Speisen, wie bspw. Salat, beladene Wageninnere abgibt. Ein weiterer Vorteil dieser erfindungsgemäss aufgebauten Cloche ist darin zu sehen, dass sich an der Innenseite der einmal aufgewärmten Cloche kein Kondenswasserniederschlag bildet, der das sorgfältig zubereitete Essen verwässert.

Die vorliegende Erfindung wird im folgenden anhand eines Ausführungsbeispiels und mit Hilfe der Figuren näher erläutert. Dabei zeigt:
Figur 1 einen erfindungsgemässen Tablett-Transportwagen;
Figur 2 ein Schaltschema des erfindungsgemässen Generator;
Figur 3 einen Querschnitt durch eine erfindungsgemässe Cloche.

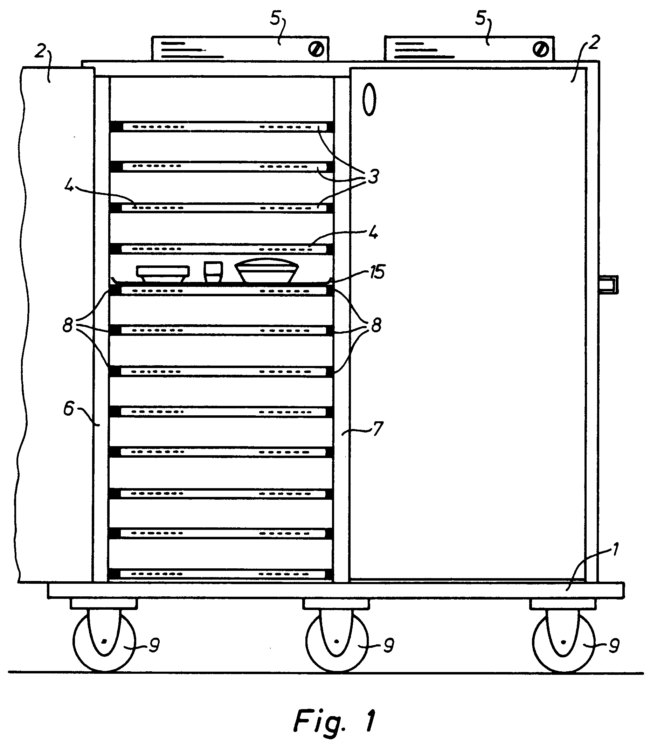

Der in Figur 1 dargestellte Tablett-Transportwagen ist wesentlicher Bestandteil des erfindungsgemässen Ensembles zum Warmhalten von Speisen. Dabei werden die auf Tabletts 15 und in entsprechendem Geschirr 16 angerichteten fertiggekochten Speisen für den Transport in den Tablett-Transportwagen 1 eingeschoben. Wird ein Tablett 15 mit Speisen in den Wagen eingeschoben, so kommt ein Teil des Tabletts über eine Spule 4 zu liegen. Die Speisen befinden sich in geschlossenen oder offenen Behältern, die mit einem elektrisch leitenden Material versehen sind. Die an dem HF-Generator 5 angeschlossenen Spulen 4 erzeugen ein elektromagnetisches Feld. Dieses Feld induziert in dem elektrisch leitenden Belag des erfindungsgemässen Geschirrs 16 einen Induktionsstrom, der zur Warmhaltung des Geschirrs und damit auch der Speisen führt. Speisen, die nicht warm gehalten werden sollen, werden auf dem Tablett 15 so positioniert, dass sie nicht über einer Spule 4 zu liegen kommen und werden ausserdem in einem nicht leitenden Material, wie z.B. Glas oder Porzellan ohne metallische Beschichtung angerichtet.

Der für die Heizung notwendige HF-Generator 5 wird in der Regel vom Stromnetz gespeist. Während des Transportes des Tabletts-Transportswagens 1 zu den Patientenabteilungen wird der Generator 5 vom Stromnetz getrennt. Dabei könnte ein im Tablett-Transportwagen mitgeführter Stromspeicher die Stromversorgung des HF-Generators übernehmen. Dieser mitgeführte Stromspeicher ist nicht erfindungswesentlich und wird hier nur der Vollständigkeit wegen erwähnt. Wenn der Tablett-Transportwagen in der Patientenabteilung angekommen ist, wird der Generator wieder an das Stromnetz angeschlossen und von diesem betrieben. Durch den erfindungsgemässen Transportwagen kann der unerwünschte Effekt des "Temperaturdurchhängers" während des Transportes vermieden werden.

Der vollständig aus Metall gefertigte Tablett-Tranportwagen 1 ist an der Vorderseite durch Türen 2 abschliessbar und ist damit nach aussen hin gegen hochfrequente elektromagnetische Störsignale abgeschirmt. Im Innern weist der Tablett-Transportwagen 1 vorzugsweise zwei Reihen zu je zwölf Lagen von Spulenträgern 3 auf, in denen sich die Induktionsspulen 4 befinden, die an der Rückseite des Tablett-Transportwagens 1 verkabelt und an den Generator 5 angeschlossen sind. Dabei sind zweimal zwölf übereinanderliegende Indukutionsspulen 4 an einen Generator angeschlossen. Dieser in Bild 1 gezeigte Tablett-Transportwagen aus zwei Reihen von 12 Lagen von Spulenträgern 3 ist daher mit zwei Generatoren 5 ausgerüstet. An der Innenseite der Seitenwände 6 und an der Mittelwand 7 befinden sich Tabletthalterungen 8, die auf der gleichen Höhe wie die Spulenträger 3 angebracht sind.

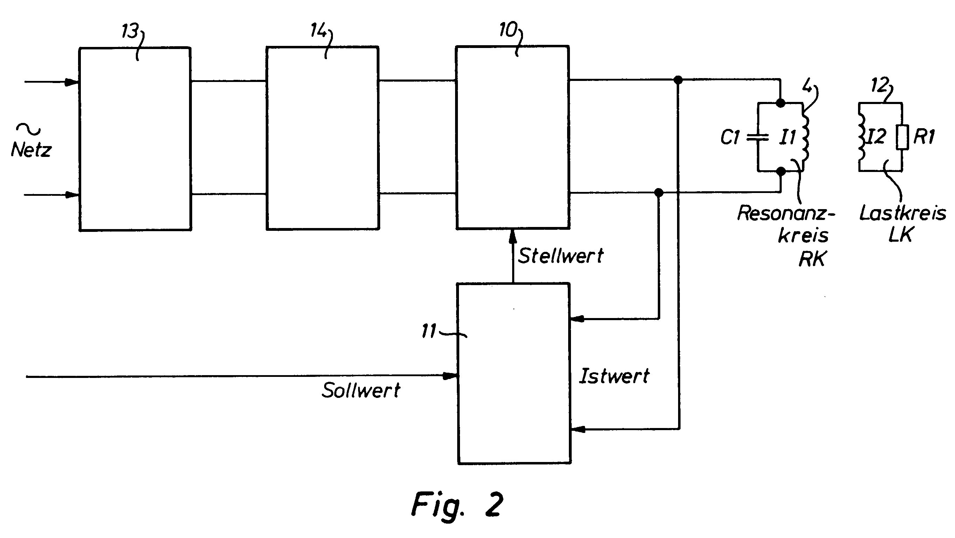

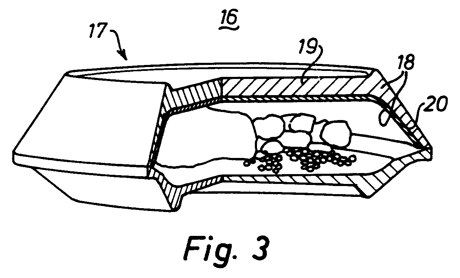

Figur 2 zeigt schematisch einen elektronischen Regler 11 zur Steuerung des Wechselstromes, welcher in der Induktionsspule 4 ein elektromagnetisches Wechselfeld erzeugt. Dieses Wechselfeld induziert im Lastkreis 12 einen Induktionsstrom. Der Lastkreis 12 entspricht den metallischen Gefässen bzw. den metallischen Beschichtungen des Geschirrs. Die Gesamtinduktivität der an den HF-Generator 5 angeschlossenen Induktionsspulen 4 liegt im Bereich von 32µH bis 76µH. Der Wechselstrom im Resonanzkreis würde eigentlich durch den Lastkreis 12 in seiner Amplitude exponentiell gedämpft sein. Der Lastkreis 12 würde die im Resonanzkreis gespeicherte Energie in wenigen Millisekunden verbraucht haben. Um die Amplitude dennoch auf dem erforderlichen Wert zu halten, wird elektrische Energie vom Netz über den Filterkreis 13 und den Gleichrichter 14 durch den Schalterkreis 10 an den Resonanzkreis nachgeliefert. Der Regler 11 bestimmt aus der Differenz von Sollwert und Istwert das notwendige Mass. Der geschaltete Strom wird im Schalterkreis 10 mittels einer Sättigungsdrossel auf für das Schaltelement ungefährliche Werte limitiert. Als Schaltelement wird ein IGBT (Isoloate Gate Bipolar Transistor) verwendet, der vom Regler 11 angesteuert wird. Der besondere Vorteil des IGBT gegenüber den üblicherweise für Generatoren verwendeten Thyristoren liegt darin, dass der IGBT für die erfindungsgemässe Verwendung des HF-Generators überraschend gut geeignet ist, weil er im Gegensatz zum Thyristor ein- und ausschaltbar ist und weil er Schaltzeiten von bis zu wenigen Mikrosekunden verarbeiten kann. Insbesondere senken sich die zu schaltenden Stromspitzen von 150A auf maximal 80A, dadurch, dass die Schaltfrequenz beim IGBT ungefähr doppelt so hoch ist als beim Thyristor. Der Lastkreis 12 der Induktionsheizung ist erfindungsgemäss ein metallisiertes bzw. ein stromleitendes Geschirrteil. Das elektromagnetische Wechselfeld induziert in den elektrisch leitenden Geschirrteil einen Induktionsstrom der zum Warmhalten des Geschirrs 16 und der darin befindlichen Speisen führt. Die stromleitenden Geschirrteile können durch einen metallischen Belag oder eine metallische Schicht realisiert werden. Der induzierte Strom erwärmt so direkt das Geschirr. Je nach Art der Speisen werden diese zusätzlich mit einer Cloche 17, wie sie z.B. in Figur 3 dargestellt ist, zugedeckt werden. Üblicherweise besteht diese Cloche 17 aus einer doppelwandigen Kunststoffschale 18, welche mit einer Hartschaumisolation 19 gefüllt ist. Erfindungsgemäss ist in diese Kunststoffschale 18, eine stromleitende Folie 20 eingelegt. Die durch den Induktionsstrom erwärmte Cloche 17 hält somit die Speisen von oben warm, ohne dass sich dabei Kondenswasser bildet.

Durch verschiedene Formen der metallischen Beschichtung der Geschirrunterseiten erhält man unterschiedliche Stromdichten, was zu unterschiedlicher Erwärmung führt. Häufig werden Teller, die an ihrer Unterseite vollständig beschichtet sind verwendet. Teller mit einer lokal unterschiedlich verteilten Beschichtung erweisen sich als besonders vorteilhaft, da damit die Temperatur lokal verschieden gehalten werden kann.

Um die Induktionsheizung optimal nutzen zu können, müssen die Speisen in Bezug auf die Induktionsspulen entsprechend positioniert werden. Dies wird mit Tabletts erreicht, die auf ihrer Oberseite Platzhalter, bspw. Nocken, Rippen oder Senken, aufweisen, die das verwechslungsfreie Positionieren des Essgeschirrs erlauben. Damit erhalten die Essensbehälter, wie Suppenteller, Menueteller, etc. ihre feste Position auf dem Tablett und folglich auch im Tablett-Transportwagen.

Weiterbildungen dieses erfindungsgemässen Transport- und Warmhaltesystems liegen im Bereich des fachmännischen Könnens. Insbesondere können die Teller in unsymmetrischer Weise beschichtet sein, oder kann der Generator von einer netzunabhängigen Stromquelle gespeist werden.

## Patentansprüche

1. Tablett-Transportwagen für die Aufnahme von mehreren Tabletts, vorzugsweise 24 Tabletts in zwei Reihen zu je 12 Lagen, welcher Transportwagen einen HF-Generator umfasst, der insbesondere vom Stromnetz gespeist wird, welcher mit Tablettträgern ausgerüstet ist, in welchen zur Erzeugung eines lokalen elektromagnetischen Wechselfeldes, mit diesem Generator verbundene Spulen eingelegt sind, welche Tabletts geeignet sind, Geschirr wahlweise über oder neben diesen Spulen zu positionieren, welches Geschirr mindestens teilweise mit einer stromleitenden Schicht versehen ist und mit einem isolierenden Deckel zusammenwirkt, an dessen Innenseite eine stromleitende Schicht angebracht ist, dadurch gekennzeichnet, dass der einen Filter (13), einen Gleichrichter (14) und einen elektronischen Schalter (10) aufweisende HF-Generator (5) zur Erzeugung eines Wechselstroms in den Induktionsspulen (4) einen Regler (11) für den Schalter (10) aufweist, welcher Schalter (10) ein IGBT (Isolate Gate Bipolar Transistor) ist, welcher Regler (11) diesen Schalter (10) mit einem Stellwert versieht, so dass die Gesamtinduktivität der Induktionsspulen (4) konstant im Bereich von 32µH bis 76µH liegt und die Stromspitzen des erzeugten Wechselstroms 80A nicht übersteigen.

2. Tablett-Transportwagen gemäss Anspruch 1, dadurch gekennzeichnet, dass dieser nach Aussen gegen hochfrequente elektromagnetische Störungen abgeschirmt ist.

3. Tablett in Verwendung mit einem Tablett-Transportwagen gemäss Anspruch 1 aus einem elektrisch nicht leitenden Material, dadurch gekennzeichnet, dass dieses Platzhalter auf der Oberseite aufweist, welche erlauben, mit einer stromleitenden Schicht mindestens teilweise versehenes Geschirr unter oder über in einem Spulenträger (3) angeordnete Spulen (4) so zu positionieren, dass die Gesamtinduktivität dieser Spulen konstant im Bereich von 32µH bis 76µH liegt.

4. Geschirr in Verwendung mit einem Tablett-Transportwagen gemäss Anspruch 1, welches mit einer stromleitenden Schicht mindestens teilweise versehen ist, dadurch gekennzeichnet, dass dieses die in Induktivität von in Spulenträgern (3) angeordneten Induktionsspulen (4) so beeinflusst, dass deren Gesamtinduktivität konstant im Bereich zwischen 32µH und 76µH liegt und auf einer konstanten Temperatur warmhaltbar ist.

5. Geschirr gemäss Anspruch 4, mit einem eine stromleitende Schicht (20) aufweisenden Deckel, der als isolierenden Cloche (17) ausgebildet ist, um das Geschirr von oben warmzuhalten.

6. Geschirr nach Anspruch 5, dadurch gekennzeichnet, dass die stromleitende Schicht (20) an der Innenseite der isolierenden Schicht (19) der Cloche (17) liegt.

7. Geschirr nach Anspruch 4, dadurch gekennzeichnet, dass die stromleitende Schicht (20) unregelmässig verteilt und/oder ungleichmässig leitfähig ist.

## Claims

1. Tray transport cart to accommodate several trays, preferably 24 trays arranged in two rows of 12 layers each, said transport car comprising an HF generator which is in particular fed by a mains supply and which is equipped with tray carriers into which coils connected to the aforementioned generator are inserted in order to generate a local alternating electromagnetic field, said trays being suitable for positioning dishes selectively above or next to said coils, such dishes being at least partially provided with a current-conductive layer and interacting with an insulating lid to an inner side of which a current-conductive layer is applied, characterized in that the HF generator (5) having a filter (13), a rectifier (14) and an electronic switch (10) comprises a controller (11) for the switch (10) for the generation of an alternating current in the induction coils (4), said switch (10) being an IGBT (Isolate Gate Bipolar Transistor), said controller (11) providing said switch (10) with a set value, so that the total inductivity of the induction coils (4) lies constant within the range of 32µH to 76µH and the current peaks of the generated alternating current do not exceed 80A.

2. Tray transport cart according to claim 1, characterized in that it is shielded towards the outside against high-frequency electromagnetic interference.

3. Tray in use with a tray transport cart according to claim 1 made of an electrically non-conductive material, characterized in that said tray is provided with position holders on its upper side to position dishes being at least partially provided with an electrically conductive layer, underneath or above the coils (4) arranged in a coil carrier (3) in such a manner, that the total inductance of these coils lies constant within the range of between 32µH and 76µH.

4. Dish in use with a tray transport cart according to claim 1, which is at least partially provided with an electrically conductive layer, characterized in that said dish influences the inductivity of induction coils arranged in coil carriers (3) such, that their total inductivity lies constant within a range of between 32µH and 75µH and can be kept warm at a constant temperature.

5. Dish according to claim 4 with a lid having a current conductive layer (20), said lid being designed as an insulating cloche (17) in order to keep the dish warm from above.

6. Dish according to claim 5, characterized in that the current conductive layer (20) is arranged on the inner side of the insulating layer (19) of the cloche (17).

7. Dish according to claim 4, characterized in that the current conductive layer (20) is unevenly distributed and/or is unevenly conductive.

## Revendications

1. Chariot de transport de plateaux pour la réception de plusieurs plateaux, de préférence 24 plateaux en deux rangées de 12 couches, lequel chariot de transport comporte un générateur HF, qui est alimenté en particulier par le réseau électrique, lequel est équipé de supports de plateaux, dans lesquels, pour produire un champ alternatif électromagnétique local, sont placées des bobines reliées à ce générateur, lesquels plateaux sont propres à positionner de la vaisselle au choix au-dessus ou à côté de ces bobines, laquelle vaisselle est pourvue au moins en partie d'une couche conductrice de courant et coopère avec un couvercle isolant, sur la face intérieure duquel est appliquée une couche conductrice de courant, caractérisé en ce qu'il comporte un filtre (13), un redresseur (14) et un générateur HF (5), comportant un interrupteur électronique (10), pour la production d'un courant alternatif dans les bobines d'induction (4), un régulateur (11) pour l'interrupteur (10), lequel interrupteur (10) est un IGBT (Isolate Gate Bipolar Transistor), lequel régulateur (11) attribue à cet interrupteur (10) une valeur de réglage de sorte que l'inductance totale des bobines d'induction (4) est constante dans l'intervalle entre 32 µH et 76 µH et les crêtes du courant du courant alternatif produit n'excèdent pas 80 A.

2. Chariot de transport de plateaux selon la revendication 1, caractérisé en ce que celui-ci est protégé vers l'extérieur contre des perturbations électromagnétiques à haute fréquence.

3. Plateau utilisé avec un chariot de transport de plateaux selon la revendication 1 fait dans un matériau électriquement non conducteur, caractérisé en ce que celui- ci présente sur sa face supérieure des garde-place qui permettent de positionner de la vaisselle, pourvus au moins en partie d'une couche conductrice de courant, au-dessous ou au-dessus de bobines (4) placées dans un porte-bobines (3), de manière que l'inductance totale de ces bobines soit constante entre 32 µH et 76 µH.

4. Vaisselle utilisée avec un chariot de transport de plateaux selon la revendication 1, qui est pourvue au moins en partie d'une couche conductrice de courant, caractérisée en ce que celle-ci influence les bobines d'induction (4) placées dans l'inductance de porte-bobines (3), de manière que leur inductance totale soit constante dans l'intervalle entre 32 µH et 76 µH et puisse être maintenue au chaud à une température constante.

5. Vaisselle selon la revendication 4 avec un couvercle présentant une couche conductrice de courant (20), qui est configuré en cloche isolante (17), pour tenir au chaud la vaisselle à partir du haut.

6. Vaisselle selon la revendication 5, caractérisée en ce que la couche conductrice de courant (20) se situe sur la face intérieure de la couche isolante (19) de la cloche (17).

7. Vaisselle selon la revendication 4, caractérisée en ce que la couche conductrice de courant (20) est répartie irrégulièrement et/ou est non uniformément conductrice.
